# EUROPEAN PATENT APPLICATION

(11) **EP 1 626 076 A1**
(43) Date of publication of application: **15.02.2006**
(21) Application number: 05291704.4
(22) Date of filing: 09.08.2005
(51) Int. Cl.: C09J 123/08, G09F 3/10, B65C 3/06, B29C 51/16

(54) **Coating composition for a label, label and method for attaching the label onto a container**

(30) Priority: 09.08.2004 EP 04292017
(71) Applicant: Amcor Flexibles Europe, 8700 Horsens (DK)
(72) Inventor: Provost, Jean-Jacques, 16300 Barret (FR)
(74) Representative: Colombet, Alain André

(57) **Abstract**

This invention relates to a method for attaching a label on a container filled with a cold product having a temperature of less than 70°C, comprising the successive steps of :
- putting a heat-sealable coating on at least a part of at least one face of the label ;
- applying the label on the container, the coated face of the label being in contact with an outer surface of the container;
- providing heat at the interface between the container and the label to activate the heat-sealable coating,
- introducing the cold product in the container,
characterized in that said heat-sealable coating comprises a polymer selected from the group consisting of ethylene-vinylacetate EVA (met)acrylic polymers, and mixtures of these copolymers, and in that said heat-sealable coating contains from 0.01% to 15% by weight of paraffin, based on the total weight of the coating.

The invention also relates to labelled containers obtainable by this method, labels used in the method and compositions for putting a heat-sealable coating on such labels.

## Description

The present invention relates to a method for attaching a label on a container filled with a product having a temperature of less than 70°C, which comprises the successive steps of:
- putting a heat-sealable coating on at least a part of at least one face of the label;
- applying the label on the container, the coated face of the label being in contact with the outer surface of the container;
- providing heat at the interface between the container and the label to activate the heat-sealable coating ; and
- introducing said product having a temperature of less than 70°C in the container.

Containers, especially containers implemented in the food industry, are generally provided with informative labels, which indicate, for example, the content of a container. Such labels can be attached on the container with a proper adhesive coating, such as heat-sealable coatings.

In most cases, a heat-sealable coating is previously coated, in a non-sticking state, on a back face of the label, opposite a printed face. Then, the label is placed on the container and heated to activate the heat-sealable coating, whereby the label adheres to the container.

Heat-sealable coatings are e.g. used to ensure the attachment of labels on containers based on thermoplastic polymers, for example on thermoformed containers used in the food industry, such as those used for the packaging of yogurts. In this case, the label coated with the heat-sealable coating is advantageously placed on the container during, or just after, the thermoforming step. Then, the heat activation of the coating is at least partially induced by the contact with the hot container.

Heat-sealable coatings commonly used for the attachment of labels on containers such as thermoplastics-based containers are so-called "hot-melt" adhesive compositions. These polymer compositions are solid below a transition temperature, which is typically in the range from 50 to 100°C, and which become low viscosity fluids at temperatures above this transition temperature. These compositions generally comprise copolymers with a low melting point such as ethylene-vinylacetate (EVA), or acrylic copolymers, usually together with additives. Depending on the nature of the copolymer and of the additives, "hot-melt" compositions with various transition temperatures may be obtained.

The hot-melt compositions that may be used for sticking labels on a given container generally depends on the temperature that may be implemented when contacting the container and the label coated with the hot-melt composition.

In some specific cases, the container is filled with "hot" products, i.e. products having a temperature of above 70°C, e.g. hot cast food products, for example so-called hot-filled desserts. Then, the hot-melt composition may be based on acrylic copolymers of relatively high melting point, because the hot products introduced in the container provide additional heat allowing the sealing of the label on the container.

On the other hand, when the container is intended to be filled with "cold" products, i.e. products having a temperature of below 70°C, typically a temperature of between 10 and 45°C, such as yogurts, hot-melt compositions with a lower transition temperature should be implemented. In this scope, the hot-melt compositions that are commonly used comprise polymers with a low melting point, such as ethylene-vinylacetate (EVA), and they specifically comprise a paraffin as an additive for decreasing the transition temperature of the hot-melt composition. Examples of such paraffin-based compositions are especially the hot-melt compositions commercialized by DUPONT under the name of ELVAX.

In machines for applying labels on containers which make use of labels coated with the paraffin-based compositions of the aforementioned type, the handling of the label in combination with the heat supplied in the machines cause the parts of the machines in contact with the composition to get rapidly dirty, whereby these parts of the machine get clogged, which decreases their efficiency and often leads to dysfunctions.

Thus, in machines implementing labels coated with paraffin-based hot-melt compositions, cleaning operations must be carried out regularly. Such operations are time consuming and increase the costs of the process.

It is known that the clogging problems observed are essentially due to the presence of paraffin in the coating. However, the presence of paraffin is commonly known as essential in the hot-melt coatings used for sticking labels on containers filled with cold products, especially when EVA is used. In that respect, reference may be made, for example, to commercial documentation relative to hot-melt coating formulations, such as Iberceras ref P394. Therefore, in processes used for sticking labels on containers filled with cold products which are presently known, paraffin is systematically used, despite the aforementioned problems, because no alternative solution has been furnished. So as to limit the problems due to paraffin, it has been proposed to reduce the paraffin content. However, in hot-melt coating formulations presently known as suitable for sticking labels on containers filled with cold products, the paraffin content is systematically of more than 20% by weight, this content being in most cases of at least 22% by weight and usually of at least 25% by weight. Such paraffin contents, even if they are relatively low, still induce clogging problems of the aforementioned type.

An object of the invention is to provide a method for attaching a label on a container filled with cold products having a temperature of less than 70°C, and which limits, and preferably avoids, the need for cleaning operations implementing in the prior art.

To this end, the invention provides a method for attaching a label on a container filled with a product having a temperature of less than 70°C, as mentioned above, characterized in that the implemented heat-sealable coating is a coating comprising a polymer selected from the group consisting of ethylene-vinylacetate EVA, (met)acrylic polymers, and mixtures of these polymers, and in that said heat-sealable coating contains 0.01% to 15% by weight of paraffin, based on the total weight of the coating, and wherein the coating preferably does not include paraffin.

The inventors have now surprisingly evidenced that a coating which is based on specific polymers selected from EVA and/or (met)acrylic polymers may actually be used as a heat-sealable coating in a process for sticking labels on containers filled with product having a temperature of less than 70°C, without needing the presence of paraffin in the coating to ensure an effective adhesion of the label on the container. This result is particularly unexpected, because it was up to now a general belief, that paraffin was a compulsory ingredient to insure the sticking of a label on a container at low temperature.

On the basis of these unforeseen results, the invention provides a method for attaching a label on a container filled with a cold product, using a heat-sealable coating with a content of paraffin that is sufficiently reduced in comparison with formulations of the prior art to avoid clogging processes. Namely, the heat-sealable coating used in the method of the invention has a paraffin content of less than 15% by weight, and preferably of less than 10% by weight. The inventors have unexpectedly evidenced that, with such a paraffin content, clogging problems are avoided, whereas such problems are still observed if a paraffin content of about 20% is used.

In the present description, the term "ethylene-vinylacetate copolymer" (or "EVA") designates a copolymer resulting from the copolymerisation of ethylene and vinylacetate monomers, generally comprising ethylene and vinylacetate repeating units only, and wherein the molar ratio ethylene/vinylacetate is preferably between 7% and 60%. EVA polymers advantageously implemented in the process of the invention are EVA which are present in hot-melt composition of the prior art, which are suitable for attaching labels on containers intended to be filled with cold products.

Besides, in the sense of the instant description, the term "(met)acrylic polymer" refers to any acrylic polymer, metacrylic polymer, or mixture thereof, which is suitable for the preparation of a "hot-melt" coating useful for attaching a label on a container intended to be filled with a cold product. Advantageously, such a "(met)acrylic polymer" is selected from the group consisting of ethylene-methylacrylate EMA, ethylene-butylacrylate EBA, ethylene-vinylacetate - ethylene - ethylacrylate, ethylene-vinylacetate - ethylene - methacrylate, and mixtures thereof.

The term "ethylene-methylacrylate copolymer" (or "EMA") designates a copolymer resulting from the copolymerisation of ethylene and methylacrylate monomers, generally comprising ethylene and methylacrylate repeating units only.

The term "ethylene-butylacrylate copolymer" (or "EBA") refers to a copolymer resulting from the copolymerisation of ethylene and butylacrylate monomers, generally comprising ethylene and butylacrylate repeating units only, and wherein the molar ratio ethylene/ butylacrylate is preferably of between 7% and 77%. Examples of EBA suitable in the process of the invention are EBA copolymers commercialized by DUPONT under the name of ELVALOY.

The term "ethylene-vinylacetate / ethylene / ethylacrylate" (or "EVAEEA") designates a terpolymer resulting from the copolymerisation of ethylene, vinylacetate and ethylacrylate monomers, and comprising a bloc based on ethylene and vinylacetate, a bloc based on ethylene repeating units, and a bloc based on ethylacrylate repeating units. Examples of EVAEEA suitable in the process of the invention are those commercialized by DUPONT under the name of ELVALOY.

Likewise, an "ethylene-vinylacetate / ethylene / metacrylate" designates a terpolymer resulting from the copolymerisation of ethylene, vinylacetate and metacrylate monomers, and comprising a bloc based on ethylene and vinylacetate, a bloc based on ethylene repeating units, and a bloc based on metacrylate repeating units.

Besides, the term "paraffin" as used in the present description refers to mixtures of saturated aliphatic hydrocarbons, especially mixtures of saturated aliphatic hydrocarbons preferably having more than 20 carbon atoms, e.g., 30 to 40 carbon atoms, such as mixtures of hydrocarbons obtainable as petroleum distillation end products. The term "paraffin" as used herein especially encompasses the paraffins commonly used in hot-melt compositions of the prior art. The heat-sealable coating used in the method of the invention comprise less than 15% by weight of such a paraffin compound, preferably less than 10% by weight.

According to a specific embodiment, the heat-sealable coating has a very low content of paraffin, typically of less than 1% by weight, preferably of less than 0,5% by weight, and more preferably of less than 0, 1 % by weight.

However, for some applications, the presence of paraffin may be useful in the heat-sealable coating, e.g. in order to confer enhanced sliding properties to the coating, which ameliorates the efficiency of the method. In this scope, the heat-sealable coating advantageously contains from 1% to 15% of paraffin, based on the total weight of the coating. This specific content allows to take benefit of some advantages of the paraffin, without observing disadvantages in term of clogging problems. In this scope, the paraffin content is preferably of at least 2%, for example of at least 3%. Besides, it is generally preferred for the paraffin to be present in an amount of less than 12%, preferably of less than 10%, and more preferably of less than 8% by weight. Thus, when the presence of paraffin is suitable, its amount is preferably of 4% to 7% by weight, for example of about 5% by weight.

According to specific embodiments, the method of the invention comprises one or several of the following features, alone or according to each technically possible combination :
- the heat-sealable coating specifically comprises ethylene-vinylacetate EVA, EVA being advantageously be the sole polymer of the heat-sealable coating ;
- the heat-sealable coating further comprises an additive enhancing its adhesive properties, selected from resins based on aromatic hydrocarbons, for example, resins commercialized under the name of Escorez 2520 by EXXON MOBIL. Such additives are particularly advantageous, since they provide some advantages of paraffin, especially a decrease of the activation temperature without inducing the problems encountered with paraffins such as the clogging of the machines;
- the product introduced in the container has a temperature between 10°C and 60°C, the product being for example a food product having a temperature between 10°C and 25°C, such as a yogurt or dairy products, or food products having a temperature of 35°C to 45°C ;
- the container is obtained by thermoforming a thermoplastic polymer, preferably selected from polystyrene PS, polyethylene PE, polypropylene PP, amorphous polyesters such as APET (amorphous polyethylene terephtalate) , and mixtures thereof. The thermoplastic implemented in that case is advantageously in the form of a multilayer sheet, with at least two distinct polymer layers, such as a barrier multilayer sheet of PS/EVOH/PE, PP/EVOH/PE, PET/PE or PET/EVOH/PE. According to this embodiment, the method generally comprises the steps of :
   - heating the thermoplastic polymer in view of thermoforming the container, preferably between 120 and 180°C, and advantageously between 125 and 150°C ; and
   - introducing the label in a thermoforming mould by placing the label in contact with the inner wall of the mould, the coated face of the label facing the inside of the mould ;
   - thermoforming the container in the mould with the label inside the mould, such that the label is applied directly to the outer surface of the container during thermoforming, heat being thus provided to the interface between label and container by the thermoplastic polymer of the container heated for the thermoforming and/or by the label in contact with the thermoforming mould ;
- the method further comprises a step of heating the mould to provide heat to the label ;
- the method further comprises a step of pre-heating the label before introducing it in the mould.

The invention also relates to containers comprising a label attached on their surface, which are obtainable by the above method.

According to another aspect, the invention further relates to a label useful for the above method, which comprises a support coated with a heat-sealable coating, wherein the heat-sealable coating comprises ethylene-vinylacetate EVA, EVA being preferably the sole polymer of the coating, and wherein the heat-sealable coating contains from 0.01% to 15% by weight of paraffin. The heat-sealable coating has preferably the advantageous paraffin content indicated above in the description.

The label of the invention provides the above mentioned advantages of the method of the invention. Furthermore, since its heat-sealable coating based on compositions which are paraffin-free or with low content of paraffin, a label of the invention may be kept in contact with other similar labels during long periods of time without leading to problems observed in the storage of paraffin-based labels, where labels tend to stick together due to the presence of paraffin which rapidly render the labels tacky upon storage. This effect is particularly noticeable when the heat-sealable coating contains less than 10% of paraffin, and especially when the heat-sealable coating does not contain paraffin.

Advantageously, the label of the invention has one or more of the following additional features :
- the heat-sealable coating contains :
   - 5 to 85% by weight, preferably from 10 to 50%, of ethylene-vinylacetate EVA; and
   - an additive enhancing adhesive properties, selected from resins based on aromatic hydrocarbons, such as Escorez 2520, the content of which is preferably of between 1 and 95%, advantageously of less than 80% and more preferably of less than 60%, for example of between 1 and 50%, especially of between 2 and 20 % ;
- the support is made of paper, or of a polymer, preferably chosen from polypropylene, polystyrene or polyesters, such as OPP (oriented polypropylene), OPS (oriented polystyrene) or OPET (oriented polyethylene terephtalate).

According to yet another aspect, the invention further relates to a composition suitable for applying a heat-sealable coating on a support to provide a label as defined above.

This composition comprises, in a proper solvent :
- ethylene-vinylacetate EVA in an amount from 5 to 85%, an preferably of between 10 to 50% by weight based on the total weight of the compounds in solution ;
- an additive enhancing adhesive properties, selected from resins based on aromatic hydrocarbons, such as Escorez 2520, preferably in an amount of between 1 and 95% by weight, based on the total weight of the compounds in solution ;
- from 0.01% to 15% by weight, for example from 1% to 15% by weight of paraffin, based on the total weight of the compounds in solution.

This composition is suitable for applying heat-sealable coating of many kinds of support, for example, paper or polymer sheets.

This composition has advantageously one or more of the following additional features :
- the composition further comprises an antifoam agent, advantageously selected from organosilicon compounds ;
- the composition further comprises a wetting agent, preferably selected from polyols, said wetting agent being preferably acetylendiol. Typically, such a wetting agent is present in the composition in an amount of between 50 to 80% by weight based on the total weight of the compounds in solution ; and
- the solvent is water, n-propyl acetate or acetyl acetate.

The invention will be better understood when reading the following description, only to be considered as an example, and made with reference to the drawings on which :
- figure 1 is a lateral elevation view of a machine for forming and filing containers;
- figure 2 is a top view of a forming post for thermoforming containers starting from a sheet of thermoformable matter;
- figure 3 is a cross-sectional view of the forming post of figure 2, along the III/III lines, before thermoforming the container; and
- figure 4 corresponds to figure 3, after thermoforming the container.

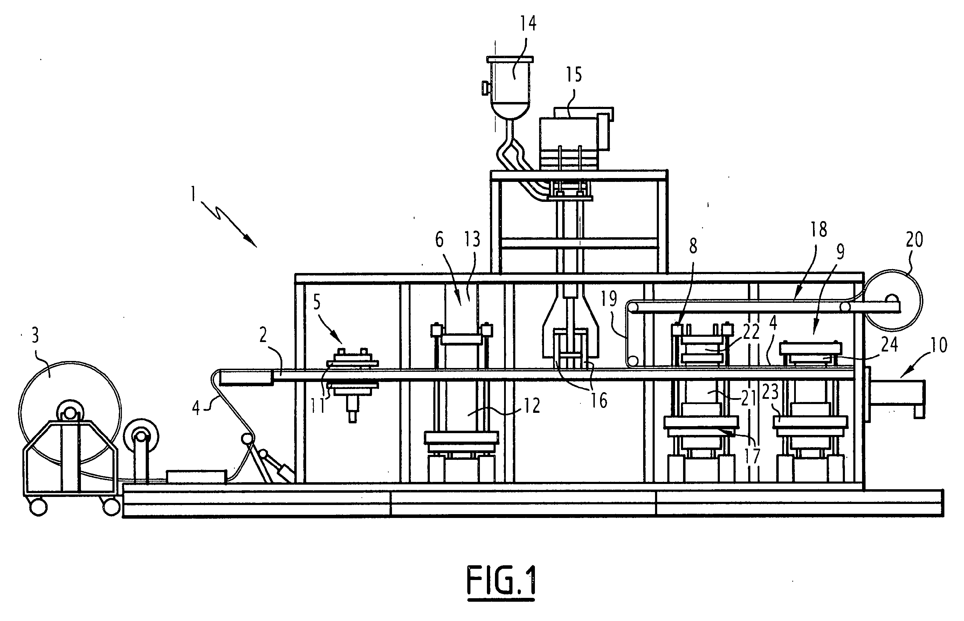

As seen on figure 1, a machine 1 for forming and filling containers comprises an unwind stand for feeding onto a conveyor 2, from a roll 3, a sheet of thermoformable matter 4. The sheet 4 is conveyed by the conveyor 2 through several succesive posts 5, 6, 7, 8 and 9.

The machine 1 comprises a first heating post 5 for heating the sheet 4, a second forming post 6 for forming containers from the heated sheet 4, a third filling post 7 for filling the containers, for example, with an edible filling, a forth sealing post 8 for sealing a lid over each filled container, a fifth trimming post 9 for separating the sealed containers into packs of containers, and an outlet 10.

The sheet 4 is made of a thermoformable matter suitable for storage of edible goods, e.g. yogurt, and a thermoplastic polymer such as polystyrene, polyethylene, polypropylene or amorphous polyethylene terephtalate (APET). The sheet 4 is advantageously an unwound polystyrene baseweb. According to another specific embodiment, the sheet 4 is advantageously a barrier multilayer sheet, such as a sheet of PS/EVOH/PE, PP/EVOH/PE, PET/PE or PET/EVOH/PE.

A portion of the sheet 4 on which several containers are to be formed and filled, passes succesively through each of the posts 5, 6, 7, 8 and 9, until it is separated from the sheet 4 at the trimming post 9.

The operations are carried out simultaneously at the different posts 5, 6, 7, 8 and 9 on the different portions of the sheet 4 present at the posts 5, 6, 7, 8 and 9. Once the operations have been completed, the sheet 4 is advanced. Each portion of the sheet 4 is then advanced toward the following posts 5, 6, 7, 8 and 9, and each of the other posts 5, 6, 7, 8 and 9 receives another portion of the sheet 4.

The heating post 5 comprises heating elements 11 through which the sheet 4 is passed so that it can be heated at a proper temperature for thermoforming. This temperature is typically between 120 and 180°C, and preferably between 125 and 150°C, especially when the sheet 4 is based on polystyrene. The heat elements 11 comprise, for example, resistances and electrical power feeding means.

The forming post 6 comprises a die 12 and a plug 13. As will be described more fully hereinafter, the die 12 comprises a plurality of cavities and the plug 13 comprises complementary projections, said complementary cavities and projections forming thermoforming moulds.

The die 12 and the plug 13 are mobile with respect to one another and with respect to the sheet 4, between a rest position where the sheet 4 can be moved and a thermoforming position where the containers are pressed in the sheet 4.

In operation, in the thermoforming position, the pre-heated sheet 4 is pressed between the plug 13 and the die 12. Each projection of the plug 13 presses a region of the sheet 4 into the corresponding cavity of the die 12. This forms container with an upper opening surrounded by a rim.

The filling post 7 comprises a tank 14 and injection means 15 for injecting an edible filling previously stored in the tank 14 into the containers by means of injecting nozzles 16.

The sealing post 8 comprises a sealing tool 17 and a means 18 for unwinding a lid sheet 19 from a lid roll 20.

The sealing tool 17 comprises a frame 21 and a sealing head 22, which are mobile with respect to each other and with respect to the sheet 4, between a rest position where the sheet 4 can be moved and a sealing position where the lid sheet 19 is sealed on the rims of the containers.

The feeding means 18 are configured to introduce the unwound lid sheet 19 between the sealing head 22 and the sheet 4, over the containers formed therein.

In operation, the head 22 is heated, and the lid sheet 19 and the rims of the containers are pressed between the head 22 and the frame 21. A bead is formed along the rim of each container. Each container is thus sealed by a lid.

The trimming post 9 comprises a frame 23 and a cutting head 24 through which the sheet 4 is passed. The cutting head 24 and the frame 23 are mobile with respect to each other and with respect to the sheet 4, between a rest position where the sheet 4 can be moved, and a cutting position where the upper rims of some containers are cut between the frame 23 and the cutting head 24 to separate the containers into packs of several containers, for example 6, 8, 12 or 16 containers.

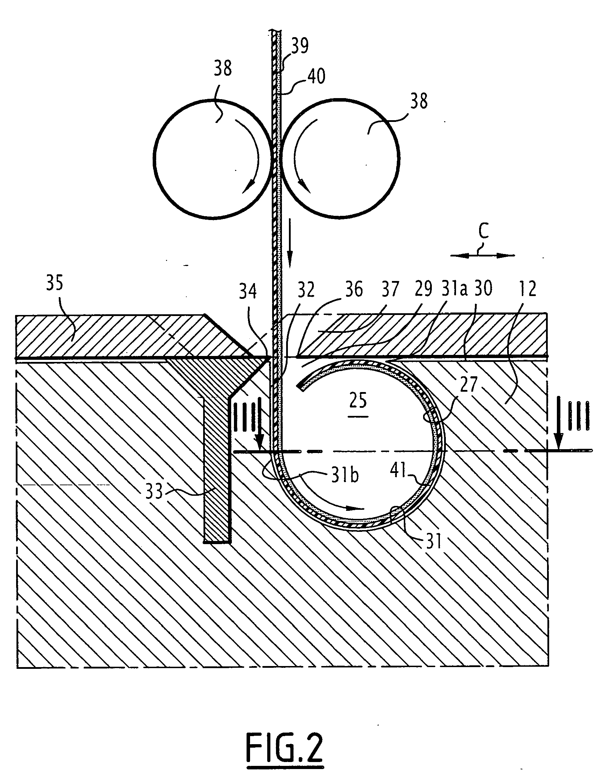

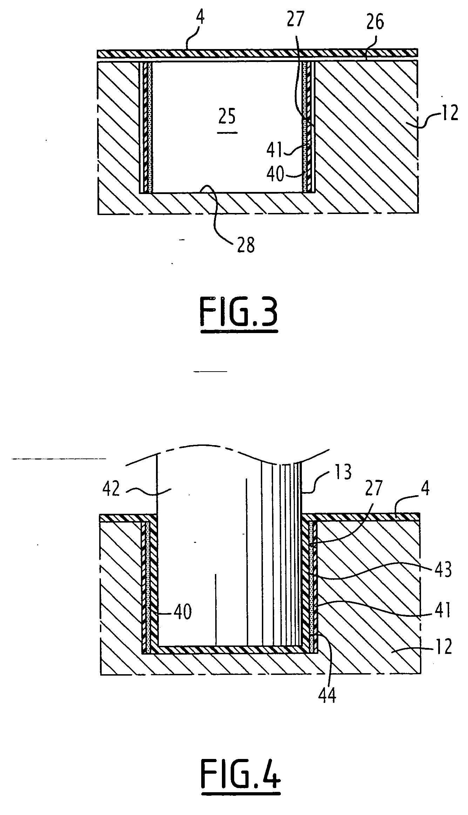

The die 12 of the forming post 6 comprises a plurality of similar cavities, only one cavity 25 being represented on figures 2 and 3.

As shown in figure 3, the cavity 25 extends axially in the die 12 from an upper surface 26 of the die 12. The cavity 25 has an upper opening at the upper surface 26, an inner lateral wall 27, and a transversal bottom 28.

As shown in figure 2, which is an axial view of the cavity 25, the lateral wall 27 has a lateral opening 29 exiting on a lateral side 30 of the die 12.

The shape of the cavity is mainly circular. The inner wall 27 comprises a first circular portion 31 extending over substantially 270° around the axis of the cavity 25. At a first circumferential extremity 31 a, the first portion 31 tangentially reaches the lateral side 30 of the die 12 and defines a first lateral axial edge of the lateral opening 29. At the second opposite circumferential extremity 31 b, the first portion 31 forms a second planar portion 32, said second portion 32 being tangential to the said second extremity of the first portion 31 and reaching the lateral side 30 of the die 12. The second portion 32 is perpendicular to the lateral side 30 and defines the second axial edge of the lateral opening 29 at the junction between them.

A first cutting tool 33 fixed on the die 12 has a counter-cutting edge 34 extending along the second axial edge of the lateral opening 29.

A second cutting tool 35 is provided on the die 12. The second cutting tool 35 has a slot 37 having a cutting edge 36 arranged to cooperate with the counter-cutting edge 34 to cut an element passing through the lateral opening 29. The second cutting tool 35 is mobile along the lateral side 30, as illustrated by arrow C, between a first opened position (solid lines) and a second closed position (dotted lines). In the first position, the slot 37 at least partly faces the lateral opening 29 of the cavity 25 and leaves a free passage through the lateral opening 29 between the counter-cutting edge 34 and the cutting edge 36. In the second position, the slot 37 is offset from the lateral opening 29 and the second cutting tool 35 closes the lateral opening 29.

The forming post 6 further comprises means 38 for feeding a continuous band 39 into the cavity 25 through the lateral opening 29. The band 39 is cut into labels. The band 39 is made of paper or of a polymer, such as OPP, OPS or OPET. The band 39 is coated on one face with a heat-sealable coating 40.

The heat-sealable coating 40 comprises 0.01% to 15% of paraffin, for example 1 to 15% of paraffin. It further comprises 5 to 85 % of a polymer selected from ethylene-vinylacetate EVA and/or (met)acrylic polymers, such as ethylene-methylacrylate EMA, ethylene-butylacrylate EBA, ethylene-vinylacetate - ethylene - ethylacrylate or ethylene-vinylacetate - ethylene - methacrylate. Typically, the heat-sealable coating 40 contains 5 to 80%, preferably 10 to 50% of EVA (for example 15-40%, e.g. about 20-30% of EVA). In most cases, the heat-sealable coating 40 further comprises 1-95% by weight, preferably 2-60% (for example about 5-20%) of a liquid hydrocarbon synthetic resin, typically Escorez 2520, which improves the adhesion properties of the heat-sealable coating 40. The given percentages are in weight, based on the total weight of the heat-sealable coating 40.

The heat-sealable coating 40 preferably has a thickness between 2 microns and 15 microns, preferably of less or equal to 7 microns.

The heat-sealable coating 40 on the band 39 is generally obtained by a film coating of a liquid composition comprising the polymer (typically EVA), preferably together with a liquid hydrocarbon synthetic resin such as Escorez 2520 in a solvent which is advantageously water or, alternatively, a suitable organic solvent such as n-propyl acetate or acetyl acetate. The composition preferably further includes an organosilicon compound as an antifoam agent. The liquid composition advantageously comprises wetting agents, preferably acetylendiol or another suitable polyol. These wetting agents are especially useful when the band 39 is made of a polymer such as polypropylene : in that case, the wetting agent allows a good spreading of the liquid composition on the band, whereby a suitable homogeneous coating is obtained. The coating is typically obtained by using hot smooth rolls or by film coating extrusion using lips.

The feeding means comprise two counter rotating rolls 38 between which the band 39 is driven onto the direction of the lateral opening 29.

In operation, the second cutting tool 35 is placed in the first position. The band 39 is advanced between the rolls 38 and introduced in the cavity 25 through the slot 37 and the lateral opening 29. The free edge of the band 39 is guided along the second portion 32 and the first portion 31 of the inner wall 27 of the cavity 25 and rolls itself in the cavity 25, in contact with the inner wall 27, as illustrated in figure 2. When enough band 39 has been introduced in the cavity 25, the rolls 38 are stopped. The second cutting tool 35 is moved toward the second position. The cutting edge 36 and the counter-cutting edge 34 cooperate to cut the band 39 into a label 41, and the second cutting tool closes the lateral opening 29 of the cavity 25.

Turning to figure 3, the label 41 is in the cavity 25 and the previously heated sheet 4, still planar, extends over the upper opening of the cavity 25.

Turning to figure 4, a projection 42 of the plug 13, substantially complementary to the cavity 25, is introduced into the cavity 25 through the upper opening. The sheet 4 is pressed by the projection 42 into the cavity 25 and takes substantially the tri-dimensionnal shape of the cavity 25, thus forming a container 43 adapted for holding contents.

During deformation of the sheet 4, the label 41 is pressed between the inner wall 27 of the cavity 25 and the outer wall surface 44 of the container 43.

Due to the heating step at heating post 5 (figure 1), the sheet 4 is heated. The temperature of the sheet 4 when pressed into the cavity 25 is typically in the range from 70 and 90°C. Therefore, heat is transferred to the interface between the container and the label 41 by the properties of the sheet 4 itself.

Heat can also be transferred from the die 12 to the band 39, and thus to the interface between the container and the label 41 by the sheet 4 itself.

This supply of heat initiates the activation of the heat-sealable coating 40 of the label 41, whereby an adhesion of the label 41 on the container 43 will finally be obtained.

In a specific embodiment, the die 12 has heating means provided therein to heat at least the inner lateral wall 27. Alternatively or additionally, before introducing the label 41 into the cavity 25, the label 41 can be pre-heated by specific heating means (not shown), by pre-heating the band 39, for example, as is done for the sheet 4. The heat stored in the label 41 and its coating 40 is then transferred at the interface between the container 43 and the label 41. These additional heating means for increasing the temperature of the die 12 and/or for the pre-heating band 39 and its coating 40 generally enhance the efficiency of the process. However, in most cases, they are not compulsory for ensuring an effective adhesion of of the band 39 on the container 43.

At the filling post 7, the containers 43 are filled with an edible filling or content. Depending on the process, the edible filling is more or less hot at the moment of filling the containers 43. Therefore, heat can be brought at the interface between the container 43 and its label 41 by the edible filling, through the walls of the container 43 itself. However, given the specific composition of the coating 40, there is generally no need for providing additional heat from the walls of the container. Thus, according to a specific embodiment, the content of the container has a temperature of less than 70°C, typically between 10 and 60°C, this temperature being for example between 20 and 45°C. The content of the container according to this specific embodiment is, e.g. a yogurt composition.

By using the coating 40, which does not comprise paraffin, the pieces of the machine 1 do not get dirty during the process.

In particular, the roll 38 in contact with the face of the band 39 coated with the heat-sealable coating does not get dirty, which avoids problems of the usual paraffin-based coatings, which would render the roll tacky and jeopardize the efficacy of the feeding of the band 39 or even induce a stress that may lead to distorsion or tearing of the band 39.

The specific use of a coating 40 with a reduced content of paraffin prevents the plugging of the lateral opening 29, which would rapidly occur if paraffin-based coatings of the prior art are used.

## Claims

1. A method for attaching a label (41) on a container (42) filled with a product having a temperature of less than 70°C, comprising the successive steps of :
- putting a heat-sealable coating (40) on at least a part of at least one face of the label (41);
- applying the label on the container, the coated face of the label (41) being in contact with an outer surface (44) of the container (43) ;
- providing heat at the interface between the container and the label to activate the heat-sealable coating,
- introducing said product having a temperature of less than 70°C in the container (43),
**characterized in that** said heat-sealable coating (40) comprises a polymer selected from the group consisting of ethylene-vinylacetate EVA (met)acrylic polymers, and mixtures of these copolymers, and **in that** said heat-sealable coating (40) contains from 0.01% to 15% by weight of paraffin, based on the total weight of the coating.

2. Method according to claim 1, **characterized in that** the heat-sealable coating (40) contains less than 1% of paraffin.

3. Method according to claim 1, **characterized in that** the heat-sealable coating (40) contains from 1% to 15% of paraffin, based on the total weight of the coating.

4. Method according to any of preceeding claims, **characterized in that** the heat-sealable coating (40) comprises ethylene-vinylacetate EVA.

5. Method according to any of preceeding claims, **characterized in that** the heat-sealable coating (40) further comprises an additive enhancing its adhesive properties, selected from resins based on aromatic hydrocarbons.

6. Method according to any of preceeding claims, **characterized in** the temperature of the product introduced in the container (43) is between 10 and 60°C.

7. Method according to any of the preceeding claims, in which the container is obtained by thermoforming a thermoplastic polymer (4), **characterized in that** it comprises the steps of :
- heating the thermoplastic polymer in view of thermoforming the container (43) ;
- introducing the label (41) in a thermoforming mould by placing the label (41) in contact with the inner wall (27) of the mould (25), the coated face of the label facing the inside of the mould ;
- thermoforming the container (43) in the mould (25) with the label inside the mould, such that the label is applied directly on the outer surface (44) of the container during thermoforming, heat being thus provided to the interface between label and container by the thermoplastic polymer of the container heated for the thermoforming and/or by the label in contact with the thermoforming mould.

8. Method according to claim 7, **characterized in that** the thermoplastic polymer (4) is selected from the group consisting of polystyrene, polyethylene, polypropylene, polyesters and mixture thereof, said thermoplastic polymer being advantageously in the form of a multilayer sheet, with at least two distinct polymer layers, for example in the form of a barrier multilayer sheet.

9. Method according to claim 7 or 8, **characterized in that** the step of the thermoplastic polymer is heated between 120 and 180°C in the step of heating the thermoplastic polymer (4) in view of thermoforming the container (43).

10. A method according to any of claims 7 to 9, **characterized in that** it comprises a step consisting in heating the mould (25) to provide heat to the label (41).

11. A method according to any of claims 7 to 10, **characterized in that** it comprises a step of pre-heating the label before being introduced it in the mould.

12. A container (43) comprising a label (41) attached on its surface, obtainable by a method according to any of the preceeding claims.

13. A label (41) useful for the method of any of claims 1 to 11, comprising a support coated with a heat-sealable coating (40), wherein said heat-sealable coating comprises ethylene-vinylacetate EVA, and wherein said heat-sealable coating contains from 0.01 % to 15% by weight of paraffin.

14. A label (41) according to claim 13, wherein said heat-sealable coating (40) contains from 1 to 15% of paraffin.

15. A label (41) according to claim 13 or 14, **characterized in that** the heat-sealable coating (40) comprises : 5 to 85 % by weight of ethylene-vinylacetate EVA; and
an additive enhancing adhesive properties, selected from resins based on aromatic hydrocarbons.

16. A label (41) according to any of claims 12 to 14, **characterized in that** the support is made of paper or of a polymer.

17. Composition suitable to be applied as a heat-sealable coating (40) on a support to provide a label (41) according to claim 15 or 16, which comprises, in a proper solvent :
- ethylene-vinylacetate EVA in an amount from 5 to 85 by weight based on the total weight of the compounds in solution ;
- an additive enhancing adhesive properties, selected from resins based on aromatic hydrocarbons;
- from 0.01% to 15% by weight of paraffin, based on the total weight of the compounds in solution.

18. Composition according to claim 17, **characterized in that** it contains from 1 to 15% of paraffin.

19. Composition according to claims 17 or 18, **characterized in that** it further comprises an antifoam agent, preferably selected from organosilicium compounds.

20. Composition according to any of claims 16 to 18, **characterized in that** it further comprises a wetting agent selected from polyols, said wetting agent being preferably acetylendiol.

21. Composition according to any of claims 16 to 19, wherein the solvent is water, n-propyl acetate or acetyl acetate.
